# EUROPEAN PATENT APPLICATION

(11) **EP 4 749 727 A1**
(43) Date of publication of application: **27.05.2026**
(21) Application number: 25215794.6
(22) Date of filing: 14.11.2025
(51) Int. Cl.: H01M 8/04302, H01M 8/04746

(54) **FUEL CELL SYSTEM**

(30) Priority: 22.11.2024 JP 2024204100
(71) Applicant: Honda Motor Co., Ltd., Toyko 105-8404 (JP)
(72) Inventor: ISHIKAWA, Susumu, Saitama, 351-0193 (JP)
(74) Representative: Weickmann & Weickmann PartmbB

(57) **Abstract**

A fuel cell system (10) includes a fuel cell stack (12), a cathode supply path (62), a cathode discharge path (64), a cathode bypass path (66), and a controller (911). The cathode supply path (62) supplies a cathode gas to the fuel cell stack (12), and the cathode discharge path (64) discharges a cathode off-gas. The cathode bypass path (66) connects the cathode supply (62) and the cathode discharge path (64). During first power generation while the fuel cell stack (12) generates electric power at a warm-up time, the controller (911) controls a first valve (74) and a third valve (78) to be open, and an opening degree of a second valve (76) to be closer to a closed side than during second power generation when and after the warm-up is completed.

## Description

### CROSS-REFERENCE TO RELATED APPLICATION

This application is based upon and claims the benefit of priority from Japanese Patent Application No. 2024-204100 filed on November 22, 2024, the content of which is incorporated herein by reference.

### BACKGROUND OF THE INVENTION

### Field of the Invention

The present invention relates to a fuel cell system.

### Description of the Related Art

There is known a technique of reducing the amount of cathode gas supplied to a fuel cell stack and performing operation at low-power generation efficiency to increase a power loss and increase the temperatures of fuel cells (warm-up) (see WO 2007/046545 A).

In recent years, technological development of the fuel cells that contribute to energy efficiency has been conducted in order for more people to be able to access affordable, reliable, sustainable, and advanced energy. As a technique related to this type of fuel cell, warm-up is conducted in some cases by causing the fuel cell stack to intentionally generate the power at low-power generation efficiency (low efficiency).

The warm-up is accompanied by the power generation, and thus the warm-up cannot be conducted in some cases depending on the charging state of the secondary battery or the state of an auxiliary machine for waste power. For this reason, there is a demand for conducting the warm-up as much as possible also in a scene where the warm-up used to be conventionally limited.

### SUMMARY OF THE INVENTION

An aspect of the present invention is a fuel cell system including: a fuel cell stack configured to generate electric power using an anode gas and a cathode gas; a cathode supply path configured to supply the cathode gas to the fuel cell stack; a cathode discharge path configured to discharge a cathode off-gas discharged from the fuel cell stack; a first valve provided on the cathode supply path; a second valve provided on the cathode discharge path; a cathode bypass path configured to bypass the fuel cell stack and to connect the cathode supply path with the cathode discharge path; a third valve provided on the cathode bypass path; and a microprocessor. The microprocessor is configured to perform, during first power generation while the fuel cell stack generates the power at a warm-up time, controlling the first valve and the third valve to be in an open state, and controlling an opening degree of the second valve to be closer to a closed side than an opening degree during second power generation while the fuel cell stack generates the power when and after the warm-up time is completed.

### BRIEF DESCRIPTION OF THE DRAWINGS

The objects, features, and advantages of the present invention will become clearer from the following description of embodiments in relation to the attached drawings, in which:
FIG. 1 is a schematic configuration diagram of a fuel cell system according to an embodiment of the present invention;
FIG. 2 is a diagram for describing a part of the control apparatus; and
FIG. 3 is a flowchart illustrating an example of processing of setting the power generation mode.

### DETAILED DESCRIPTION OF THE INVENTION

Hereinafter, embodiments of the invention will be described below with reference to the drawings.

### <Configuration of Fuel Cell System>

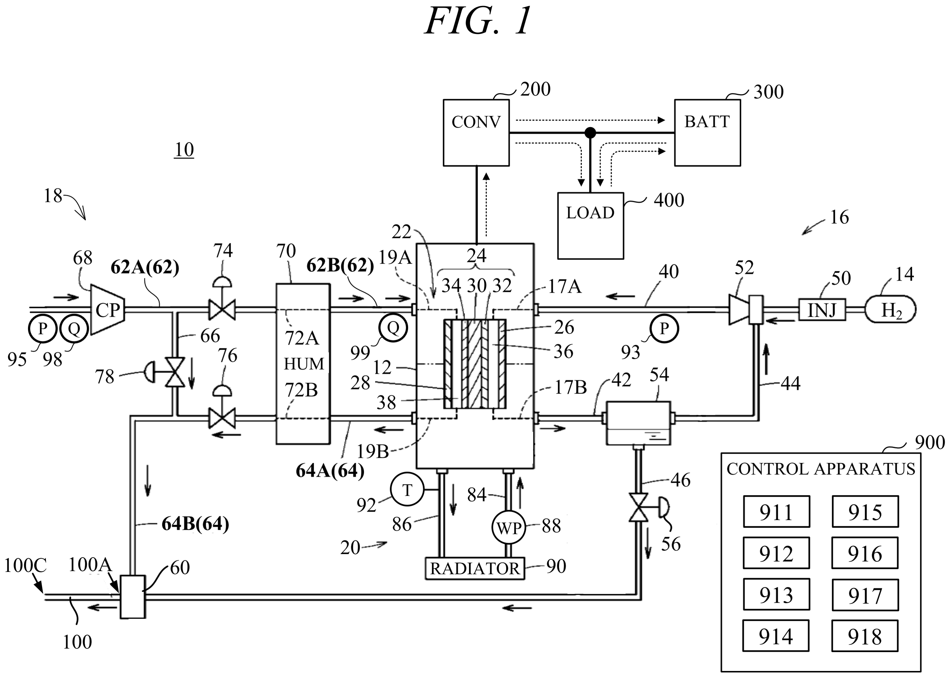

FIG. 1 is a schematic configuration diagram of a fuel cell system 10 according to the present invention. The fuel cell system 10 is mounted on a vehicle (a fuel cell automobile). Alternatively, the fuel cell system 10 may be mounted on a ship, an aircraft, a robot, or the like.

The fuel cell system 10 includes a fuel cell stack 12, a hydrogen tank 14, an anode system 16, a cathode system 18, a cooling system 20, and a control apparatus 900. Output (electric power) of the fuel cell stack 12 is boosted up to a necessary voltage by a voltage converter 200, and is supplied to a battery 300 as a secondary battery, or is supplied to a load 400 such as a motor.

The battery 300 is made up of, for example, a lithium ion battery. According to an embodiment, as an example, regenerative power from the load 400 and FC power obtained by the power generation operation of the fuel cell stack 12 are stored (charged) in the battery 300, and are then discharged from the battery 300 in order to make the vehicle travel and to actuate a predetermined auxiliary machine group.

The fuel cell stack 12 includes a plurality of power generation cells 22, which are stacked in one direction. Each power generation cell 22 includes an electrolyte membrane and electrode structure 24 (also simply referred to as an electrode structure 24) and a pair of separators 26 and 28. The pair of separators 26 and 28 sandwich the electrode structure 24.

The electrode structure 24 includes a solid polymer electrolyte membrane 30 (also simply referred to as an electrolyte membrane 30), an anode electrode 32, and a cathode electrode 34. The electrolyte membrane 30 is, for example, a thin film of perfluorosulfonic acid containing moisture. The anode electrode 32 and the cathode electrode 34 sandwich the electrolyte membrane 30. The anode electrode 32 and the cathode electrode 34 each have a gas diffusion layer made of carbon paper or the like. Porous carbon particles are uniformly applied to the surface of the gas diffusion layer to form an electrode catalyst layer. A platinum alloy is supported on the surface of the porous carbon particles. The electrode catalyst layer is formed on both surfaces of the electrolyte membrane 30.

An anode flow path 36 is formed on a surface facing the electrode structure 24 among the surfaces of the separator 26. The anode flow path 36 is connected with an anode supply flow path 40 through an anode inlet 17A. The anode flow path 36 is connected with an anode discharge flow path 42 through an anode outlet 17B. A cathode flow path 38 is formed on a surface facing the electrode structure 24 among the surfaces of the separator 28. The cathode flow path 38 is connected with a cathode supply flow path 62 through a cathode inlet 19A. The cathode flow path 38 is connected with a cathode discharge flow path 64 through a cathode outlet 19B.

Note that the supply flow path may be referred to as a supply path. The discharge flow path may be referred to as a discharge path.

An anode gas (hydrogen) is supplied to the anode electrode 32. In the anode electrode 32, hydrogen ions and electrons are generated from hydrogen molecules in accordance with an electrode reaction of a catalyst. The hydrogen ions permeate through the electrolyte membrane 30, and move to the cathode electrode 34. The electrons move sequentially in the order of the anode electrode 32, a negative electrode terminal (not illustrated) of the fuel cell stack 12, the voltage converter 200, a positive electrode terminal (not illustrated) of the fuel cell stack 12, and the cathode electrode 34. In the cathode electrode 34, hydrogen ions and electrons react with oxygen contained in the supplied air in accordance with the action of the catalyst, and water is produced.

The anode system 16 includes each component for supplying an anode gas to the anode electrode 32 and each component for discharging an anode off-gas from the anode electrode 32. The anode system 16 includes the anode supply flow path 40, the anode discharge flow path 42, a circulation flow path 44, and a drain flow path 46. The anode system 16 also includes an injector 50, an ejector 52, a gas-liquid separator 54, and a drain valve 56.

Note that the anode discharge flow path 42 and the drain flow path 46 will be collectively referred to as an anode discharge flow path, in some cases.

The anode supply flow path 40 communicates between a discharge port of the hydrogen tank 14 and the anode inlet 17A. The injector 50, the ejector 52, and a pressure sensor 93 are provided on the anode supply flow path 40. The ejector 52 is disposed to be closer to the anode inlet 17A than the injector 50. The pressure sensor 93 is disposed to be closer to the anode inlet 17A than the ejector 52. The pressure sensor 93 detects the pressure of the anode gas, and sends a detection signal to the control apparatus 900.

The anode discharge flow path 42 communicates between the anode outlet 17B and an intake port of the gas-liquid separator 54. The circulation flow path 44 communicates between an exhaust port of the gas-liquid separator 54 and the ejector 52. The drain flow path 46 communicates between a drain port of the gas-liquid separator 54 and an inlet of a dilutor 60. The drain valve 56 is provided on the drain flow path 46.

The cathode system 18 includes each component for supplying a cathode gas to the cathode electrode 34 and each component for discharging a cathode off-gas from the cathode electrode 34. The cathode system 18 includes the cathode supply flow path 62, the cathode discharge flow path 64, and a bypass flow path 66. The cathode system 18 also includes a compressor 68 as a cathode gas supply device, a humidifier 70, a sealing valve 74 as a first valve, a back pressure valve 76 as a second valve, and a bypass valve 78 as a third valve.

Note that the bypass flow path may be referred to as a cathode bypass path.

The cathode supply flow path 62 communicates between an air intake port (not illustrated) and the cathode inlet 19A. The compressor 68, the sealing valve 74, and a flow path 72A of the humidifier 70 are provided on the cathode supply flow path 62. A cathode supply flow path 62A denotes an upstream portion, further upstream than the humidifier 70, of the cathode supply flow path 62. A cathode supply flow path 62B denotes a downstream portion, further downstream than the humidifier 70, of the cathode supply flow path 62. A pressure sensor 95, an air flow sensor 98, the compressor 68, and the sealing valve 74 are provided on the cathode supply flow path 62A. The sealing valve 74 is disposed to be closer to the humidifier 70 than the compressor 68. The pressure sensor 95 and the air flow sensor 98 are disposed to be closer to the air intake port (not illustrated) than the compressor 68. The pressure sensor 95 detects the pressure of the sucked air (atmosphere), and sends a detection signal to the control apparatus 900. The pressure sensor 95 also functions as an atmospheric pressure sensor outside the vehicle. The air flow sensor 98 detects a supply flow rate of the cathode gas (may be referred to as a compressor supply flow rate), and sends a detection signal to the control apparatus 900.

An air flow sensor 99 is provided on the cathode supply flow path 62B. The air flow sensor 99 detects a flow rate of the cathode gas supplied to the fuel cell stack 12 (may be referred to as a stack supply flow rate), and sends a detection signal to the control apparatus 900. The stack supply flow rate corresponds to a flow rate (may be referred to as a bypass flow rate) obtained by subtracting a flow rate of the cathode gas flowing through the bypass flow path 66 from the compressor supply flow rate.

The cathode discharge flow path 64 communicates between the cathode outlet 19B and the inlet of the dilutor 60. A flow path 72B of the humidifier 70 and the back pressure valve 76 are provided on the cathode discharge flow path 64. A cathode discharge flow path 64A denotes an upstream portion, further upstream than the humidifier 70, of the cathode discharge flow path 64. A cathode discharge flow path 64B denotes a downstream portion, further downstream than the humidifier 70, of the cathode supply flow path 62. The back pressure valve 76 is provided on the cathode discharge flow path 64B.

A discharge pipe 100 is constituted of, for example, a hollow pipe having a length about one meter. An inlet 100A of the discharge pipe 100 is connected with an outlet of the dilutor 60. An outlet 100C of the discharge pipe 100 is located, for example, under the floor of a substantially central portion of the vehicle. The provision of the discharge pipe 100 discharges the gas (a combined gas in which the cathode off-gas that has flowed through the cathode discharge flow path 64B and the anode off-gas that has flowed through the anode discharge flow path 42 and the drain flow path 46 are combined together) that has been diluted by the dilutor 60 to the outside (into the atmosphere) in a space away from the user in the vehicle.

The bypass flow path 66 communicates between the cathode supply flow path 62A and the cathode discharge flow path 64B. For example, the bypass flow path 66 communicates a portion, between the compressor 68 and the sealing valve 74, of the cathode supply flow path 62A with a portion, further downstream than the back pressure valve 76, of the cathode discharge flow path 64B. The bypass valve 78 is provided on the bypass flow path 66.

The cooling system 20 includes each component for supplying a refrigerant to the fuel cell stack 12 and each component for discharging the refrigerant from the fuel cell stack 12. The cooling system 20 includes a refrigerant supply flow path 84 and a refrigerant discharge flow path 86. In addition, the cooling system 20 includes a refrigerant pump 88, a radiator 90, and a temperature sensor 92.

A refrigerant flow path (not illustrated) for cooling the fuel cell stack 12 is formed inside the fuel cell stack 12. The refrigerant supply flow path 84 communicates between an outlet of the radiator 90 and an inlet of the refrigerant flow path. The refrigerant pump 88 is provided on the refrigerant supply flow path 84. The refrigerant discharge flow path 86 communicates between an outlet of the refrigerant flow path and an inlet of the radiator 90. The temperature sensor 92 is provided on the refrigerant discharge flow path 86. The temperature sensor 92 detects the temperature of the refrigerant discharged from the fuel cell stack 12, and sends a detection signal to the control apparatus 900.

The control apparatus 900 is a computer (for example, an ECU of the vehicle). The control apparatus 900 includes a controller 911, a storage 912, a supply flow rate first calculator 913, a supply flow rate second calculator 914, a selector 915, a cathode compressor controller 916, a bypass valve opening degree calculator 917, and a bypass valve controller 918.

The controller 911 includes a processing circuit. The processing circuit may be a processor such as a CPU. The processing circuit may be an integrated circuit such as an ASIC or an FPGA. By executing a program stored in the storage 912, the processor is capable of performing various types of processing. At least some of a plurality of types of processing may be performed by an electronic circuit including a discrete device.

The controller 911 controls the operation of the fuel cell system 10. For example, the controller 911 receives detection signals from various sensors provided in the fuel cell system 10. The controller 911 outputs a control signal for controlling each valve, the injector 50, the compressor 68, the refrigerant pump 88, or the like, based on each detection signal. Each valve, the injector 50, the compressor 68, the refrigerant pump 88, or the like operates in accordance with the control signal. Note that the controller 911 sets a power generation mode based on a power generation request and/or a warm-up request, and conducts control for the operation of the fuel cell system 10, based on the power generation request and/or the warm-up request in accordance with the power generation mode that has been set.

The storage 912 includes a volatile memory and a nonvolatile memory. Examples of the volatile memory include a RAM. The volatile memory is used as a working memory of the processor. The volatile memory temporarily stores data or the like necessary for processing or operation. Examples of the nonvolatile memory include a ROM, and a flash memory. The nonvolatile memory is used as a memory for storing data. The nonvolatile memory stores programs, tables, maps, and the like. At least a part of the storage 912 may be provided in the processor, the integrated circuit, or the like, as described above.

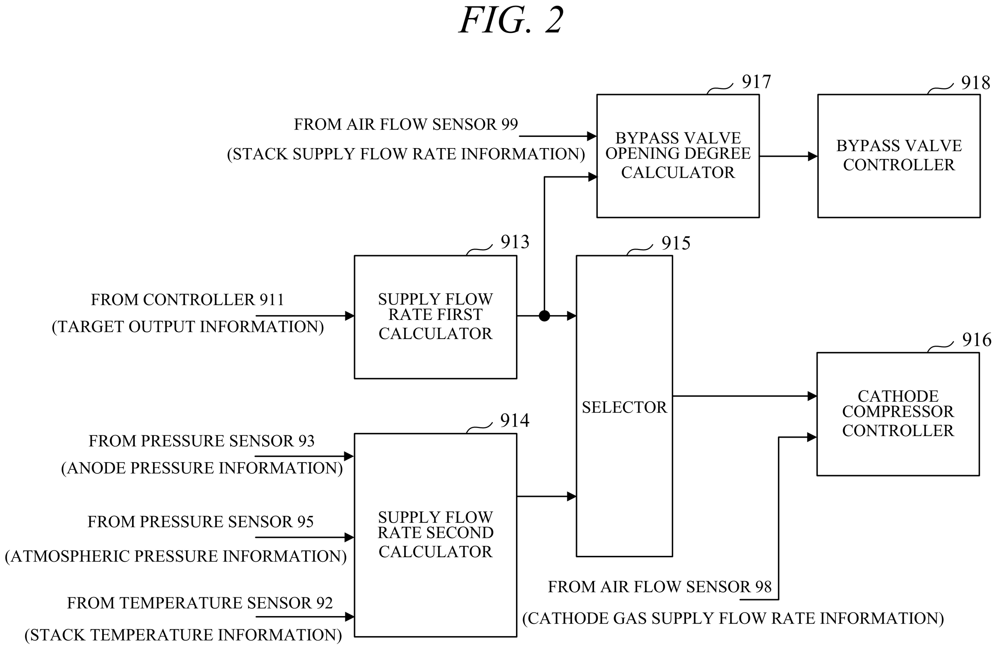

FIG. 2 is a diagram for describing the supply flow rate first calculator 913, the supply flow rate second calculator 914, the selector 915, the cathode compressor controller 916, the bypass valve opening degree calculator 917, and the bypass valve controller 918, which are included in the control apparatus 900.

Target output information indicating a target output (may be referred to as a target power generation amount or target electric power) of the fuel cell stack 12 is input from the controller 911 into the supply flow rate first calculator 913. The supply flow rate first calculator 913 calculates a first target flow rate (may be referred to as a first discharge amount), based on the target output. The first target flow rate is a target value of the supply flow rate of the cathode gas to the fuel cell stack 12 for ensuring oxygen partial pressure necessary for electrode reaction in the cathode electrode 34 of each power generation cell 22, when the target output is made available from the fuel cell stack 12. The first target flow rate increases or decreases in accordance with a target output in a case where there is a power generation request. That is, the supply flow rate of the cathode gas based on the power generation request is larger, in a case where the target output is larger than a case where the target output is smaller.

The above target output, anode pressure information indicating the pressure of the anode gas (detected by the pressure sensor 93), atmospheric pressure information indicating the atmospheric pressure (detected by the pressure sensor 95), and stack temperature information indicating the stack temperature (detected by the temperature sensor 92) are input into the supply flow rate second calculator 914. The supply flow rate second calculator 914 calculates a second target flow rate (may be referred to as a second discharge amount), based on the input values of these pieces of information. The second target flow rate is a target value of the supply flow rate of the cathode gas to the dilutor 60. Such a target value of the supply flow rate is necessary to dilute the hydrogen concentration of the exhaust gas discharged to the outside of the fuel cell system 10 from the outlet 100C of the discharge pipe 100 to be less than combustible concentration. The second target flow rate increases or decreases in accordance with the hydrogen concentration of the anode off-gas in a case where there is a dilution request. That is, the supply flow rate of the cathode gas based on the dilution request is larger in a case where the hydrogen concentration is higher than a case where the hydrogen concentration is lower.

A signal indicating the above first target flow rate and a signal indicating the above second target flow rate are input into the selector 915. The selector 915 usually selects a larger target flow rate from the first target flow rate based on the target output and the second target flow rate based on the dilution request, as a target compressor supply flow rate, based on a command from the controller 911.

In addition, the selector 915 selects the second target flow rate based on the dilution request as the target compressor supply flow rate during the power generation conducted for the warm-up, based on a command from the controller 911.

A signal indicating a compressor supply flow rate (detected by the air flow sensor 98) and a signal indicating a target compressor supply flow rate are input into the cathode compressor controller 916. The cathode compressor controller 916 calculates a torque command value for the compressor 68, based on a deviation between the compressor supply flow rate and the target compressor supply flow rate, and controls the compressor 68 in accordance with such a torque command value. This controls the compressor supply flow rate to the target compressor supply flow rate.

Stack supply flow rate information indicating the stack supply flow rate (detected by the air flow sensor 99) and a signal indicating the first target flow rate are input into the bypass valve opening degree calculator 917. The bypass valve opening degree calculator 917 calculates, as a target bypass valve opening degree, the opening degree of the bypass valve 78 for setting the stack supply flow rate to the first target flow rate, based on a deviation between the stack supply flow rate and the first target flow rate.

In a case where the selector 915 selects the first target flow rate as the target compressor supply flow rate, the compressor 68 is controlled so that the compressor supply flow rate is the first target flow rate. This eliminates the need to bypass the cathode gas that has been discharged from the compressor 68, and the target bypass valve opening degree is set to be fully closed.

On the other hand, in a case where the selector 915 selects the second target flow rate as the target compressor supply flow rate, the compressor supply flow rate is higher than the first target flow rate because hydrogen that has been discharged to the drain flow path 46 is diluted. For this reason, the bypass valve opening degree calculator 917 sets the target bypass valve opening degree so as to flow the amount of a surplus (obtained by subtracting the first target flow rate from the second target flow rate) to the bypass flow path 66.

A signal indicating a target bypass valve opening degree is input into the bypass valve controller 918. The bypass valve controller 918 controls the opening degree of the bypass valve 78 to the target bypass valve opening degree.

### <Flow of Fluid>

### 1. Anode system

The flow of fluid in the anode system 16 in FIG. 1 will be described.

The injector 50 injects the anode gas (hydrogen) of the hydrogen tank 14 toward downstream of the anode supply flow path 40. The anode gas that has been injected from the injector 50 flows through the anode supply flow path 40, and is supplied to the anode flow path 36. The anode gas flows through the anode flow path 36, and is then discharged as an anode off-gas from the anode outlet 17B. The anode off-gas contains hydrogen that has not reacted with oxygen, nitrogen in the cathode gas that has permeated through the electrolyte membrane 30, and moisture that has been generated by the reaction between oxygen and hydrogen.

The anode off-gas flows through the anode discharge flow path 42, and is supplied to the gas-liquid separator 54. The gas-liquid separator 54 separates the anode off-gas into a gas component (the anode off-gas) and a liquid component (water). The anode off-gas discharged from the gas-liquid separator 54 flows through the circulation flow path 44, and is supplied to the ejector 52. In the ejector 52, the anode off-gas and the anode gas injected from the injector 50 are combined together.

The water that has been separated by the gas-liquid separator 54 is temporarily stored in the bottom of the gas-liquid separator 54. While the drain valve 56 is open, the water stored in the gas-liquid separator 54 flows through the drain flow path 46, and is discharged to the dilutor 60. While the drain valve 56 is open with no water in the gas-liquid separator 54, the anode off-gas of the gas-liquid separator 54 flows through the drain flow path 46, and is discharged to the dilutor 60.

### 2. Cathode system

The flow of fluid in the cathode system 18 will be described.

The compressor 68 ejects a cathode gas (air) that has been sucked from the outside of the vehicle toward downstream of the cathode supply flow path 62. While the sealing valve 74 is open, the cathode gas that has been discharged from the compressor 68 flows through the cathode supply flow path 62, and is supplied to the cathode flow path 38. The cathode gas flows through the cathode flow path 38, and is discharged as a cathode off-gas from the cathode outlet 19B. The cathode off-gas contains each component contained in air and the moisture that has been generated by the reaction between oxygen and hydrogen.

While the back pressure valve 76 is open, the cathode off-gas flows through the cathode discharge flow path 64, and is discharged to the dilutor 60. The cathode off-gas contains moisture. In the humidifier 70, the moisture of the cathode off-gas is used to humidify the cathode gas.

While the bypass valve 78 is open, the cathode gas flows through the bypass flow path 66 and the cathode discharge flow path 64, and is discharged to the dilutor 60. The bypass flow path 66 is used to reduce the amount of cathode gas supplied to the fuel cell stack 12.

### <Warm-up>

According to an embodiment, when the stack temperature (detected by the temperature sensor 92) decreases to a predetermined temperature at the time of starting the fuel cell system 10, the control apparatus 900 causes the fuel cell system 10 to conduct warm-up power generation (corresponding to first power generation to be described later). During the warm-up power generation, the flow rate of the cathode gas is reduced as compared with that during the normal power generation (corresponding to second power generation to be described later), and the fuel cell stack 12 is caused to conduct the power generation at low efficiency (may be referred to as a low-efficiency power generation request), and thus the generated amount of heat is increased as compared with that during the normal power generation. For example, the cathode gas supply flow rate based on the low-efficiency power generation request is set to be smaller than the cathode gas supply flow rate based on the normal power generation request.

In the low-efficiency power generation, by the way, the concentration of surplus hydrogen in the anode off-gas increases. Hence, even in a case where the cathode gas to be supplied to the fuel cell stack 12 is reduced, it is necessary to feed the cathode gas necessary for dilution (in other words, not reducing the cathode gas) to the dilutor 60 (may be referred to as a dilution request), in some cases.

In the following, description will be further made with regard to control for supplying necessary cathode gas to the dilutor 60 in response to the dilution request while reducing the flow rate of the cathode gas supplied to the fuel cell stack 12 in accordance with the low-efficiency power generation request.

### (Flow Rate of Cathode Gas during Normal Power Generation)

In the control apparatus 900, the bypass valve opening degree calculator 917 calculates, as the target bypass valve opening degree, the opening degree of the bypass valve 78 for setting the stack supply flow rate to the first target flow rate, based on a deviation between the stack supply flow rate and the first target flow rate.

In addition, the control apparatus 900 causes the selector 915 to select the larger one of the first target flow rate and the second target flow rate, as the target compressor supply flow rate.

In a case where the first target flow rate is larger than the second target flow rate, the selector 915 selects the first target flow rate as the target compressor supply flow rate. The cathode compressor controller 916 controls the compressor 68 so that the compressor supply flow rate becomes the first target flow rate. The bypass valve opening degree calculator 917 in this case only has to supply the cathode gas that has been discharged from the compressor 68 to the fuel cell stack 12 without bypassing the cathode gas and without change, and thus the target bypass valve opening degree is set to be fully closed.

In a case where the first target flow rate is smaller than the second target flow rate, the selector 915 selects the second target flow rate as the target compressor supply flow rate. The cathode compressor controller 916 controls the compressor 68 so that the compressor supply flow rate becomes the second target flow rate. The bypass valve opening degree calculator 917 in this case sets the target bypass valve opening degree so that the amount of a surplus (that is, obtained by subtracting the first target flow rate from the second target flow rate) of the cathode gas that has been discharged from the compressor 68 flows to the bypass flow path 66.

### (Flow Rate of Cathode Gas During Warm-Up Power Generation)

The selector 915 selects the second target flow rate as the target compressor supply flow rate during the warm-up power generation. The cathode compressor controller 916 controls the compressor 68 so that the compressor supply flow rate becomes the second target flow rate. The bypass valve opening degree calculator 917 in this case sets the target bypass valve opening degree so that the amount of a surplus (that is, obtained by subtracting the first target flow rate from the second target flow rate) of the cathode gas that has been discharged from the compressor 68 flows to the bypass flow path 66.

Even if the bypass valve opening degree calculator 917 sets the target bypass valve opening degree to the fully open state, the flow rate of the cathode gas supplied to the fuel cell stack 12 might exceed the first target flow rate in consideration of the structural flow division ratio determined by the inner diameters of pipe lines that constitute the cathode supply flow path 62 and the bypass flow path 66. That is, the power generation amount by the fuel cell stack 12 might exceed the target output for the warm-up power generation, in some cases. Therefore, according to an embodiment, during the warm-up power generation, the back pressure valve 76 is controlled in a closing direction, based on a command from the controller 911, so that the opening degree of the back pressure valve 76 is controlled to be smaller than that during the normal power generation. This makes it possible to control the flow rate of the cathode gas to be supplied to the fuel cell stack 12 to the first target flow rate.

Note that even though the flow rate of the cathode gas to be supplied to the fuel cell stack 12 is reduced during the warm-up power generation as compared with that during the normal power generation, the compressor supply flow rate is controlled to the second target flow rate. Therefore, the flow rate of the total cathode gas to be supplied to the dilutor 60 is not reduced, and the dilution request is satisfied.

### <Description of Flowchart>

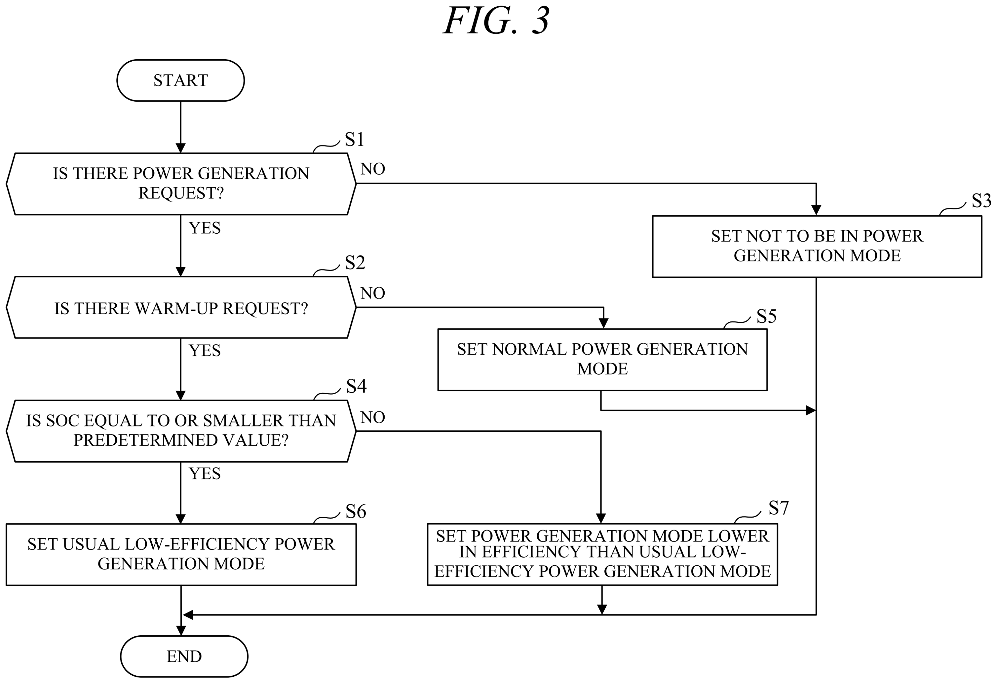

FIG. 3 is a flowchart illustrating an example of processing of setting the power generation mode, which is performed by the controller 911, based on a predetermined program. The controller 911 performs the processing illustrated in FIG. 3 at the time of starting the fuel cell system 10 (for example, the timing when an ignition switch (not illustrated) of the vehicle is turned on).

In step S1, the controller 911 determines whether there is a power generation request to the fuel cell system 10 from the ECU, not illustrated. In a case where there is the power generation request, the controller 911 makes an affirmative determination in step S1, and the processing proceeds to step S2. In a case where there is no power generation request, the controller 911 makes a negative determination in step S1, and the processing proceeds to step S3.

In step S2, the controller 911 determines whether there is a warm-up request. As an example, in a case where the stack temperature (detected by the temperature sensor 92) is lower than a predetermined temperature, the controller 911 determines that there is the warm-up request, and makes an affirmative determination in step S2, and the processing proceeds to step S4. In a case where the stack temperature is equal to or higher than the predetermined temperature, the controller 911 determines that there is no warm-up request, and makes a negative determination in step S2, and the processing proceeds to step S5. Note that the controller 911 may determine the presence or absence of the warm-up request, based on the temperature of the cathode off-gas flowing through the cathode discharge flow path 64 or the temperature of the anode off-gas flowing through the anode discharge flow path 42.

In step S3, the controller 911 sets not to be in the power generation mode (may be referred to as a standby mode), and ends the processing of FIG. 3. In the standby mode, the controller 911 controls the sealing valve 74, the back pressure valve 76, and the bypass valve 78 so that the cathode gas that has been discharged from the compressor 68 is not supplied to the fuel cell stack 12. For example, the controller 911 brings the sealing valve 74 into a closed state, and brings the bypass valve 78 into an open state.

In step S4, the controller 911 determines whether the state of charge (SOC, which may be referred to as a battery charging rate) of the battery 300 is equal to or smaller than a predetermined value.

In a case where the SOC is equal to or smaller than the predetermined value, the controller 911 makes an affirmative determination in step S4, and the processing proceeds to step S6. In a case where the SOC is not equal to or smaller than the predetermined value, the controller 911 makes a negative determination in step S4, and the processing proceeds to step S7.

The processing proceeds to step S5 in a case where a warm-up operation is not performed. In step S5, the controller 911 sets the normal power generation mode, and ends the processing of FIG. 3.

The processing proceeds to step S6 in a case where the warm-up operation is performed in a state in which the charging rate of the battery 300 is lowered. In step S6, the controller 911 sets usual low-efficiency power generation mode, and ends the processing of FIG. 3.

The processing proceeds to step S7 in a case where the warm-up operation is performed in a state in which the charging rate of the battery 300 is not lowered. In step S7, the controller 911 sets a power generation mode lower in efficiency than the usual low-efficiency power generation mode, and ends the processing of FIG. 3.

According to the above-described embodiments, the following operational effects are obtained.
(1) The fuel cell system 10 includes: the fuel cell stack 12, which conducts power generation using an anode gas and a cathode gas; the cathode supply flow path 62, which supplies the cathode gas to the fuel cell stack 12; the cathode discharge flow path 64, which discharges the cathode off-gas that has been discharged from the fuel cell stack 12; the first valve 74 provided on the cathode supply flow path 62; the second valve 76 provided on the cathode discharge flow path 64; the bypass flow path 66, which bypasses the fuel cell stack 12, and connects the cathode supply flow path 62 with the cathode discharge flow path 64; the third valve 78 provided on the bypass flow path 66; and the controller 911, which controls the second valve 76 and the third valve 78 to be in an open state during the first power generation while the fuel cell stack 12 generates the power at the warm-up time, and which also controls the opening degree of the second valve 76 to be closer to a closed side than the opening degree during the second power generation while the fuel cell stack 12 generates the power when and after the warm-up time is completed.

With such a configuration, it becomes possible to increase the opportunity for the warm-up more than a conventional case. For example, while maintaining the opening degrees of the second valve 76 and the third valve 78, it becomes possible to reduce the flow rate of the cathode gas passing through the fuel cell stack 12 during the first power generation more than that during the second power generation. That is, in a case where the warm-up is necessary, the second valve 76 is controlled to be closer to the closed side than that of a case where the warm-up is not necessary, and thus it becomes possible to appropriately conduct the low-efficiency power generation in which the flow rate of the cathode gas is reduced more than that in the conventional case.

In this manner, a flow division ratio equal to or higher than that in the original piping structure is achievable during the first power generation (the warm-up time), so that the target output of the fuel cell stack 12 can be suppressed to be lower.
(2) The fuel cell system 10 in the above (1) further includes: the battery 300 as a chargeable and dischargeable secondary battery; and a function of the controller 911 as an information acquisition unit that acquires information indicating the state of charge (for example, SOC) of the battery 300, and the controller 911 controls the opening degree of the second valve 76 in a plurality of stages, based on the state of charge of the battery 300 during the first power generation.

With such a configuration, for example, the opening degree of the second valve 76 is controlled in a plurality of stages, based on the SOC of the battery 300, so that the power generation amount (the target output) of the fuel cell stack 12 during the first power generation (the warm-up time) can be controlled in the plurality of stages.
(3) In the fuel cell system 10 in the above (2), the controller 911 controls the opening degree of the second valve 76 to the second opening degree higher than the first opening degree, in a case where the SOC is smaller than a predetermined value during the first power generation, and controls the opening degree of the second valve 76 to the first opening degree, in a case where the SOC is equal to or larger than the predetermined value.

With such a configuration, for example, when the SOC of the battery 300 exceeds the predetermined value and the battery absorption allowable power decreases, in other words, when it is difficult for the battery 300 to absorb the generated current from the fuel cell stack 12, the opening degree of the second valve 76 is controlled to the first opening degree, which is further closer to the closed side, and the power generation amount is suppressed. That is, the first power generation (the warm-up) can be appropriately conducted so that the battery 300 is not overcharged. This enables the first power generation to continue longer than a case where the opening degree of the second valve 76 is maintained at the second opening degree.
(4) In the fuel cell system 10 in the above (3), during the first power generation, the fuel cell stack 12 generates the power at the power generation efficiency lower than that during the second power generation in a state in which the second valve 76 is controlled to either the first opening degree or the second opening degree.

With such a configuration, the opening degree of the second valve 76 is controlled to either the first opening degree or the second opening degree, so that the power generation amount of the fuel cell stack 12 is suppressed. In addition, the warm-up is conducted using the amount of heat generated during the low-efficiency power generation, so that overcharge prevention and the warm-up of the battery 300 are appropriately enabled.
(5) In the fuel cell system 10 in the above (4), the controller 911 sets, as the first opening degree during the first power generation, the opening degree which is smaller than the opening degree set for the second valve during the second power generation, and which is equal to or larger than a minimum opening degree settable for the second valve.

With such a configuration, it becomes possible to conduct the first power generation (the warm-up) at lower efficiency than that during the second power generation in consideration of the durability of the second valve 76.
(6) The fuel cell system 10 in the above (5) further includes the compressor 68 as a cathode gas supply unit that supplies the cathode gas to the cathode supply flow path 62, and the controller 911 controls the compressor 68 to discharge the cathode gas of a larger discharge amount of the first discharge amount based on the power generation request and the second discharge amount based on the dilution request during the second power generation, and to discharge the cathode gas of the second discharge amount during the first power generation.

With such a configuration, it becomes possible to satisfy both the power generation request and the dilution request while controlling the opening degree of the second valve 76 to either the first opening degree or the second opening degree. In particular, during the first power generation while the SOC of the battery 300 is high and the low-efficiency power generation is necessitated, it becomes possible to conduct the low-efficiency power generation (to satisfy the power generation request and the warm-up request) without changing the total air amount discharged from the compressor 68 (to satisfy the dilution request).

The above embodiments may be modified into various modes. Hereinafter, modifications will be described.

### (Modifications)

In a case where the negative determination is made in step S4 described above, and in a case where the SOC of the battery 300 is a value larger than the above predetermined value and the charging rate of the battery 300 exceeds a second predetermined value indicating that the battery is substantially fully charged, the power generation mode may not be set (the standby mode), and the processing of FIG. 3 may end. This makes it possible to prevent overcharge of the battery 300 due to continuous power generation even at low efficiency.

On the other hand, in a case where the SOC of the battery 300 is larger than the above predetermined value and is equal to or smaller than the second predetermined value, the processing proceeds to step S7 to set the power generation mode to the power generation mode lower in efficiency than the usual low-efficiency power generation mode. The warm-up power generation is conducted in the power generation mode lower in efficiency than the usual low-efficiency power generation mode, and thus it becomes possible to continue the warm-up while suppressing an increase in the charging rate of the battery 300 more moderately.

The above embodiment can be combined as desired with one or more of the above modifications. The modifications can also be combined with one another.

According to the present invention, it is possible to increase the opportunity for the warm-up more than a conventional case.

Above, while the present invention has been described with reference to the preferred embodiments thereof, it will be understood, by those skilled in the art, that various changes and modifications may be made thereto without departing from the scope of the appended claims.

## Claims

1. A fuel cell system comprising:
a fuel cell stack (12) configured to generate electric power using an anode gas and a cathode gas;
a cathode supply path (62) configured to supply the cathode gas to the fuel cell stack (12);
a cathode discharge path (64) configured to discharge a cathode off-gas discharged from the fuel cell stack (12);
a first valve (74) provided on the cathode supply path (62);
a second valve (76) provided on the cathode discharge path (64);
a cathode bypass path (66) configured to bypass the fuel cell stack (12) and to connect the cathode supply path (62) with the cathode discharge path (64);
a third valve (78) provided on the cathode bypass path (66); and
a controller (911), wherein
the controller (911), during first power generation while the fuel cell stack (12) generates the electric power at a warm-up time, controls the first valve (74) and the third valve (78) to be in an open state, and controls an opening degree of the second valve (76) to be closer to a closed side than an opening degree during second power generation while the fuel cell stack (12) generates the electric power when and after the warm-up is completed.

2. The fuel cell system according to claim 1, further comprising:
a secondary battery (300) configured to be rechargeable; and
an information acquisition unit configured to acquire information indicating a state of charge of the secondary battery (300), wherein
the controller (911), during the first power generation, controls the opening degree of the second valve (76) in a plurality of stages based on the state of charge of the secondary battery (300).

3. The fuel cell system according to claim 2, wherein
the controller (911) controls the opening degree of the second valve (76) to a second opening degree larger than a first opening degree when a value indicating the state of charge is smaller than a predetermined value during the first power generation, and controls the opening degree of the second valve (76) to the first opening degree when the value is equal to or larger than the predetermined value.

4. The fuel cell system according to claim 3, wherein
the fuel cell stack (12) is configured to generate the electric power at a power generation efficiency lower than a power generation efficiency during the second power generation while the second valve (76) is controlled to either the first opening degree or the second opening degree during the first power generation.

5. The fuel cell system according to claim 4, wherein
the controller (911) sets, as the first opening degree during the first power generation, an opening degree smaller than an opening degree set for the second valve (76) during the second power generation and equal to or larger than a minimum opening degree settable for the second valve (76).

6. The fuel cell system according to claim 5, further comprising:
a cathode gas supply unit (68) configured to supply the cathode gas to the cathode supply path (62), wherein
the controller controls the cathode gas supply unit (68) such that, during the second power generation, the cathode gas of a larger discharge amount of a first discharge amount based on a power generation request and a second discharge amount based on a dilution request is discharged, and during the first power generation, the cathode gas of the second discharge amount is discharged.
